# EUROPÄISCHE PATENTSCHRIFT

(11) **EP 1 625 982 B1**
(45) Veröffentlichungstag und Bekanntmachung des Hinweises auf die Patenterteilung: **27.12.2006**
(21) Anmeldenummer: 05090210.5
(22) Anmeldetag: 13.07.2005
(51) Int. Cl.: B60R 21/20

(54) **Beifahrerairbagmodul**
Passenger airbag modul
Module d'airbag pour passager

(30) Priorität: 13.08.2004 DE 102004040235
(43) Veröffentlichungstag der Anmeldung: 15.02.2006
(73) Patentinhaber: Takata-Petri AG, 63743 Aschaffenburg (DE)
(72) Erfinder: Kretzschmar, Albrecht, 65618 Niederselters (DE); Kampfmann, Wolfgang, 63863 Eschau (DE); Fuchs, Stefan, 63773 Goldbach (DE); Boll, Rüdiger, 63808 Haibach (DE); Sahm, Norbert, 63743 Aschaffenburg (DE); Kempe, Christian, 63741 Aschaffenburg (DE); Webert, Thomas, 97833 Habichsthal (DE); Porrmann, Volker, 63739 Aschaffenburg (DE); Papa, Maximo, 63741 Aschaffenburg (DE); Müller, Norbert, 63743 Aschaffenburg (DE); Eckert, Nick, 12587 Berlin (DE); Liebetrau, Matthias, 14612 Falkensee (DE); Leontidis, Achilleas, 63741 Aschaffenburg (DE); Bartholomäus, Ralf, 63864 Glattbach (DE)
(74) Vertreter: Baumgärtel, Gunnar

(56) Entgegenhaltungen:
- EP-A- 0 790 154
- DE-A1- 10 216 217
- US-A- 4 153 273
- US-A- 5 480 182
- US-A- 5 857 696
- US-A- 5 988 677

## Beschreibung

Die Erfindung betrifft ein Beifahrerairbagmodul nach dem Oberbegriff des Anspruchs 1.

Airbagmodule werden bei der Neuentwicklung eines Kraftfahrzeuges ebenfalls neu entwickelt, um sie der Fahrzeugstruktur optimal anzupassen. Dabei werden zumindest der Gassack , der Diffusor und das Airbaggehäuse neu entwickelt, wodurch hohe Kosten bezüglich der Teileherstellung und der Qualitätssicherstellung entstehen.

Aus der US 4 153 273 ist ein gattungsgemäße Beifahrerairbagmodul bekannt.

Zur Verringerung der Entwicklungskosten ist es bekannt, z.B. aus der DE 195 05 507 C2, den Gassack als selbsttragenden Gassack auszubilden. Dabei wird ein Rohrgasgenerator in den unteren Abschnitt des Gassacks eingeführt. Der Gassack umschlingt den Gasgenerator teilweise und wird so ohne zusätzliche Befestigungsmittel gehalten. Bei der Neuentwicklung des Airbagsystems wird dadurch die Entwicklung der Befestigung des Gassack erleichtert.
Der Erfindung liegt die Aufgabe zugrunde, die Kosten für die Neuentwicklung eines Airbagsystems weiter zu senken.

Erfindungsgemäß wird das gemäß den Merkmalen des Anspruchs 1 erreicht.

Bei einem Beifahrerairbagmodul mit mindestens einem Gasgenerator, Diffusor, selbsttragenden Gassack und Airbaggehäuse, wird das erfindungsgemäß dadurch erreicht, dass ein Komponentensystem aus dem Gassack, dem Diffusor, dem Gasgenerator und einem schalenförmigen Gassackhalteteil vorgesehen ist, das zwischen dem Airbaggehäuse und dem Gasgenerator angeordnet ist und das von dem unteren Abschnitt des selbsttragenden Gassacks mindestens teilweise umschlungen ist.

Dieses System kann in unterschiedliche Airbaggehäuse eingebaut werden, die den neu entwickelten Kraftfahrzeugen angepasst sind. Durch die Veränderung der Größe der Airbaggehäuse kann das System auch leicht an unterschiedliche Gassackgrößen angepasst werden. Insbesondere durch die Verwendung eines gesonderten Gassackhalteteils wird das aus dem Gasgenerator austretende heiße Gas vom Airbaggehäuse ferngehalten, so dass dieses aus unterschiedlichen Materialien, wie Magnesiumlegierungen oder Kunststoff, der keine hohen Temperaturen verträgt, bestehen kann. Der weitere Vorteil des Komponentensystems besteht darin, dass sowohl 2d- als auch 3D-Gassäcke verwendet werden können.

Der Diffusor ist insbesondere so ausgebildet, dass zwischen diesem und dem schalenförmigen Gassackhalteteil eine Diffusorkammer vorhanden ist. Vorzugsweise ist der Diffusor schalenförmig und in einer Ausführungsform sind der Diffusor und das Gassackhalteteil als zylinderförmige Halbschalen ausgebildet. Diese haben flanschartige Ränder, die in Montagelage aufeinanderliegen. Es ist zweckmäßig, dass bei dieser Ausführungsform das Gassackhalteteil und der Diffusor an mindestens einer Stirnseite für die Einführung eines Rohrgasgenerators offen sind. So ist es möglich, den Gasgenerator in einfacher Weise im Gassack zu positionieren, nachdem das Gassackhalteteil und der Diffusor bereits in den Gassack eingebracht worden sind.

Es ist zweckmäßig, dass der Gassack im Bereich außerhalb des Gassackhalteteils, in Richtung deer Längsachse des Gasgenerators gesehen, zwischen dem Diffusor und dem Gasgenerator liegt. Dadurch wird der Gassack zusätzlich fixiert.

Für die Verbindung des kompletten Systems aus Gassack, Diffusor, Gasgenerator und Gassackhalteteil mit dem Airbaggehäuse sind gesonderte oder mit einem Bauteil verbundene Verbindungselemente vorgesehen. Als solche sind insbesondere Gewindebolzen am Diffusor vorgesehen.

Die Abströmgeometrie kann im Diffusor entsprechend den Applikationsanforderungen leicht modifiziert werden, ohne große Änderungen am Gesamtsystem vorzunehmen. So kann der Diffusor Druchbrüche als Gasauslass oder ausgestellte Hutzen als Gasauslass und für die Gasführung aufweisen.

Die Erfindung soll in Ausführungsbeispielen anhand von Zeichnungen erläutert werden.
Es zeigen:
- Fig. 1: eine Explosionsdarstellung des Komponentensystems;
- Fig. 2: das zusammengebaute Komponentensystem in perspektivischer Ansicht;
- Fig. 3: eine Seitenansicht des Komponentensystems;
- Fig. 4: eine Draufsicht auf das Komponentensystem;
- Fig. 5: den Schnitt C-C nach Fig. 4;
- Fig. 6: den Schnitt B-B nach Fig. 4;
- Fig. 7: den Schnitt A-A nach Fig. 4;
- Fig. 8: eine perspektivische Ansicht des Komponentensystems mit Airbaggehäuse;
- Fig. 9: eine Vorderansicht des Systems nach Fig. 8;
- Fig. 10: eine Seitenansicht des Systems nach Fig.8;
- Fig. 11: eine Draufsicht des Systems nach Fig. 8;
- Fig. 12: den Schnitt C-C nach Fig. 11;
- Fig. 13: den Schnitt B-B nach Fig. 10;
- Fig. 14: den Schnitt A-A nach Fig. 11 im vergrößertem Maßstab;
- Fig. 15: eine erste Ausführungsform des Diffusors;
- Fig. 16: eine zweite Ausführungsform des Diffusors.

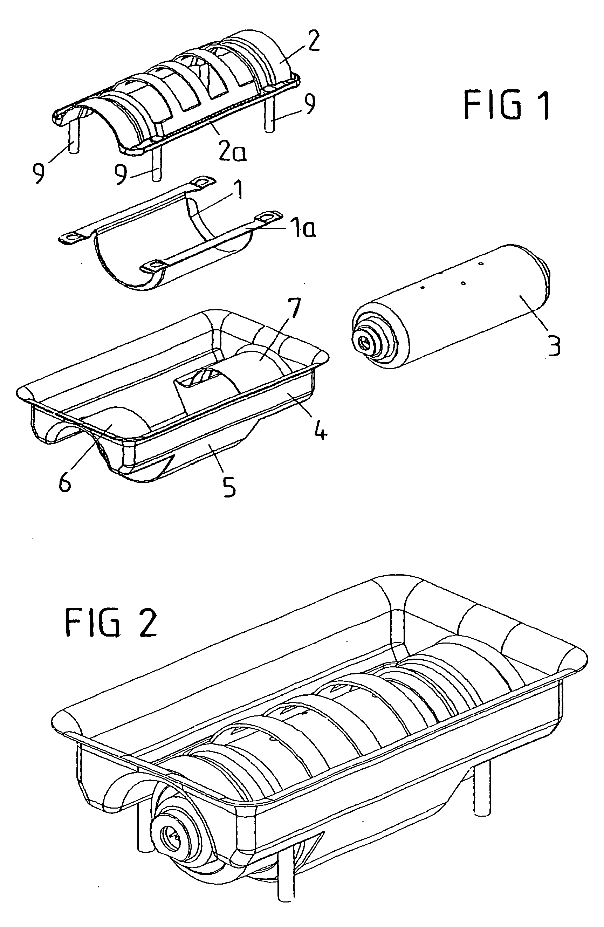

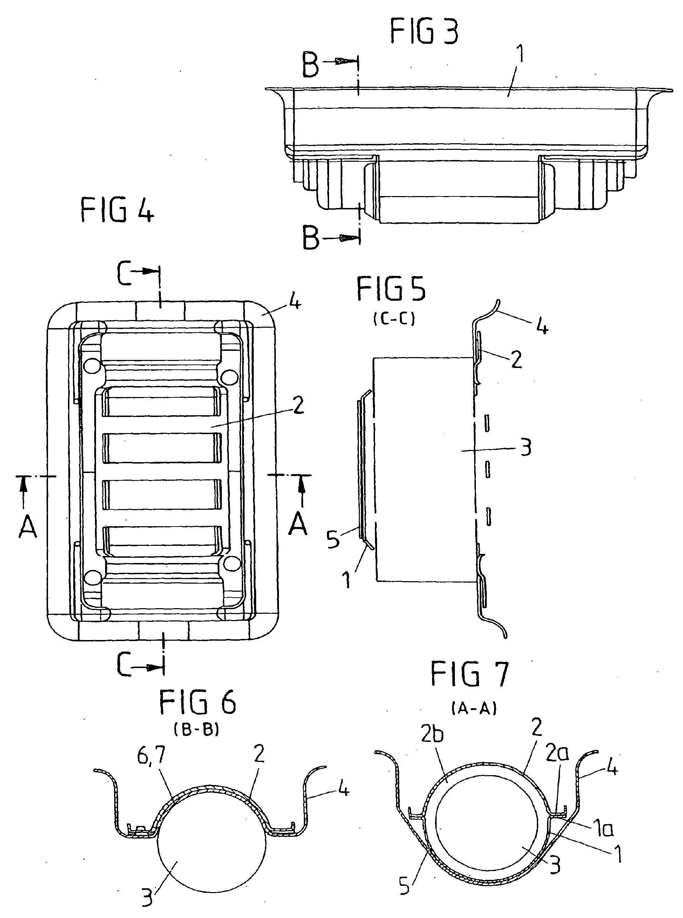

Die Fig. 1 zeigt die Komponenten des erfindungsgemäßen Systems. Dieses besteht aus einem schalenförmigen Gassackhalteteil 1, einem Diffusor 2, einem Rohrgasgenerator 3 und einem Gassack 4, von dem nur der Bereich des Gassackmundes dargestellt ist. Der Gassack 4 weist im Bereich des Gassackhalteteils 1 eine Schlaufe 5 auf. Außerhalb dieses Bereiches, in Richtung der Längsachse des Gasgenerators 3 gesehen, weist der Gassack 4 je einen nach oben gewölbten Abschnitt 6, 7 auf. In der dargestellten Ausführungsform lassen sich die Teile in einfacher Weise zu dem in der Fig. 2 dargestellten System zusammenfügen. Hierzu werden zunächst außerhalb des Gassacks 4 das Gassackhalteteil 1 und der Diffusor 2 aufeinandergesteckt, so dass die flanschartigen Ränder 1a, 2a aufeinanderliegen. Diese Teilbaugruppe wird in die Schlaufe 5 des Gassacks 4 eingeführt. Anschließend wird der Rohrgasgenerator 3 in die zwischen dem Gassackhalteteil 1 und dem Diffusor 2 gebildete Diffusorkammer 2b (Fig.7) eingeführt.

Im Bereich des Gassackhalteteils 1 umschlingt die Schlaufe 5 des Gassascks 4 dieses Gassackhalteteil und fixiert so den Gassack innerhalb des Komponentensystems, wie es in den Figuren 3, 5 und. 7 dargestellt ist. Im Bereich außerhalb des Gassackhalteteils legen sich die Abschnitte 6, 7 des Gassacks 4 zwischen den Diffusor 2 und den Rohrgasgenerator 3 und fixieren so den Gassack 4 zusätzlich, wie es aus den Figuren 5 und. 6 ersichtlich ist.

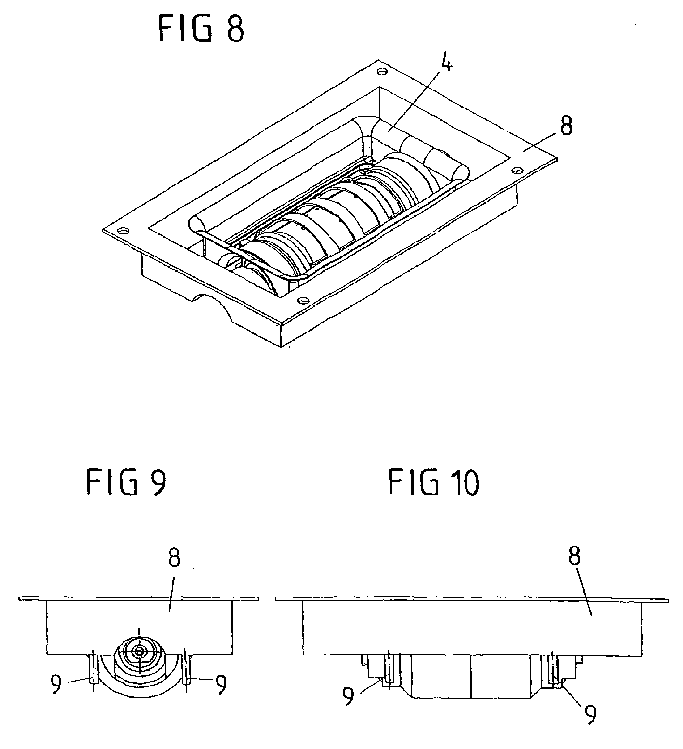

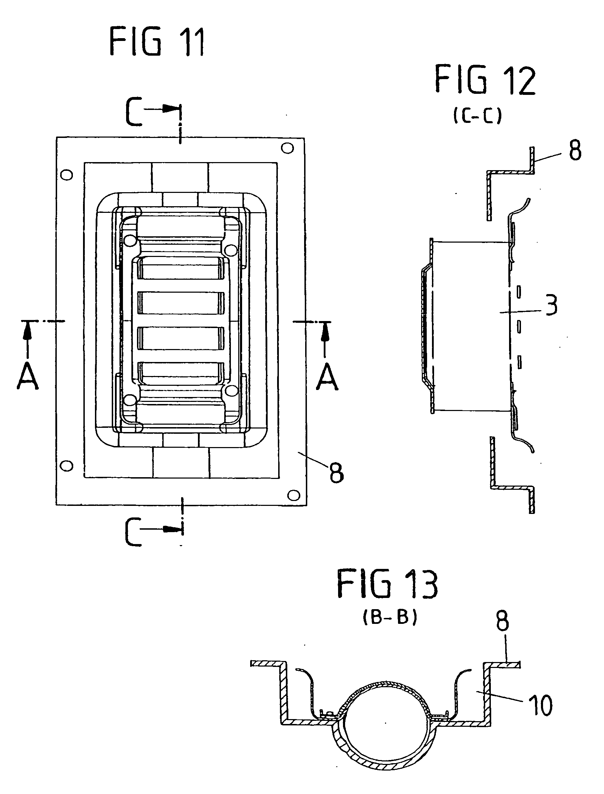

Zur Befestigung des Komponentensystems in einem Airbaggehäuse 8 sind bei der in den Figuren dargestellten Ausführungsform Gewindebolzen 9 am Diffusor 2 vorgesehen, mit deren Hilfe die Befestigung des Komponentensystems dauerhaft erreicht wird. Wie aus den Figuren 8 bis 13 erkennbar ist, kann das System durch Veränderung der Größe des Airbaggehäuses 8, z.B. durch Veränderung der Länge und/oder Breite, an unterschiedliche Gassackgrößen angepaßt werden, d.h. ohne daß die übrigen Komponenten des Komponentensystems verändert werden müssen, kann ein unterschiedlich großer Stauraum 10 für den Gassack erzielt werden.

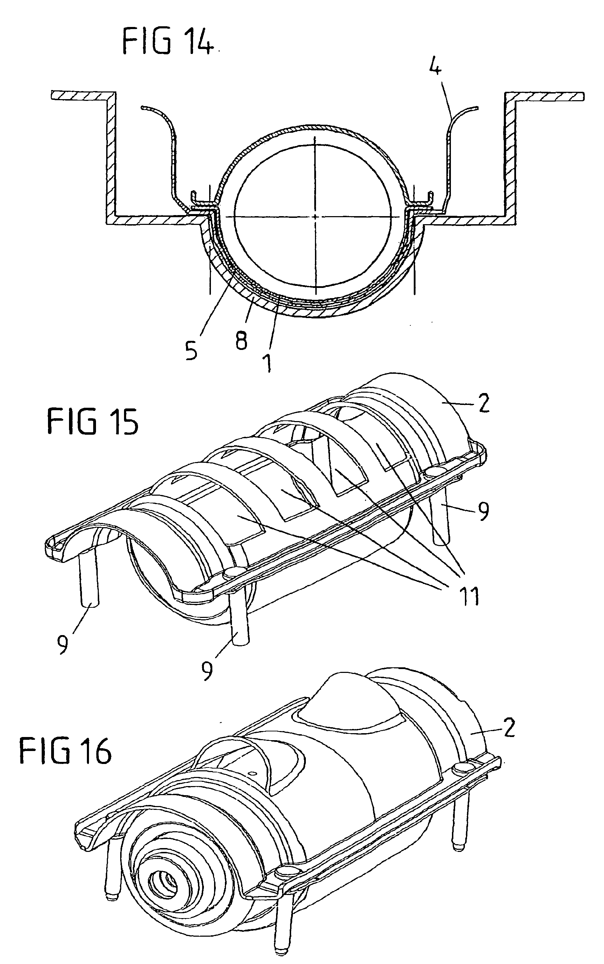

Aus der Fig. 14 ist nochmals die Halterung der Schlaufe 5 des Gassacks 4 im Bereich des Gassackhalteteils 1 erkennbar. Es ist zweckmäßig, dass dieses aus Blech besteht. Auf diese Weise wird das Airbaggehäuse vor Beschädigungen durch das aus dem Rohrgasgenerator austretende Gas geschützt, wodurch die thermische und mechanische Belastung des Airbaggehäuses 8 verringert wird. Dieses kann deshalb aus Kunststoff hergestellt werden. Wegen der selbsttragenden Befestigung des Gassacks mittels der Schlaufe 5 ist eine geringer dimensionierte Befestigung des Systems zur Kraftübertragung an das Airbaggehäuse 8 erforderlich.

In den Figuren 15 und 16 sind unterschiedliche Ausführungsformen der Abströmgeometrie des Diffusors 2 dargestellt. Der Diffusor 2 der Fig. 15 weist einfache Durchbrüche 11 für den Austritt der Gase auf. In der Fig. 16 weist der Diffusor 2 ausgestellte Hutzen 12, 13 zur Gasführung auf. Diese unterschiedliche Abströmgeometrie beeinflusst die Abmessungen des Komponentensystems nicht, so dass dessen Vorteile, nämlich die Einsparung von Entwicklungskosten und -zeiten, erhöhte Qualität und verbessertes Sicherheitspotential beim Airbageinsatz bestehen bleiben.

## Patentansprüche

1. Beifahrerairbagmodul mit mindestens einem Gasgenerator, Diffusor, selbsttragenden Gassack und Airbaggehäuse,
wobei ein Komponentensystem aus dem Gassack (4), dem Diffusor (2), dem Gasgenerator (3) und einem schalenförmigen Gassackhalteteil (1) vorgesehen ist, das zwischen dem Airbaggehäuse (8) und dem Gasgenerator (3) angeordnet ist und das von dem unteren Abschnitt (5) des selbsttragenden Gassacks (4) mindestens teilweise umschlungen ist, dass weiterhin Verbindungselemente (9) für die Verbindung des kompletten Systems aus Gassack (4), Diffusor (2), Gasgenerator (3) und Gassackhalteteil (1) mit dem Airbaggehäuse vorgesehen sind, **dadurch gekennzeichnet, dass** die Verbindungselemente(9)auch für die Verbindung des Diffusors (2) mit dem Gassackhalteteil (1) vorgesehen sind.

2. Beifahrerairbagmodul nach Anspruch 1, **dadurch gekennzeichnet, dass** der Diffusor (2) so ausgebildet ist, dass zwischen diesem und dem schalenförmigen Gassackhalteteil (1) eine Diffusionskammer (2b) vorhanden ist.

3. Beifahrerairbagmodul nach Anspruch 1 oder 2, **dadurch gekennzeichnet, dass** der Diffusor schalenförmig ist.

4. Beifahrerairbag nach Anspruch 3, **dadurch gekennzeichnet, dass** der Diffusor (2) und das Gassackhalteteil (1) als zylinderförmige Halbschlaen ausgebildet sind, die flanschartige Ränder (1a, 2a) aufweisen, die in Montagelage aufeinander liegen.

5. Beifahrerairbag nach Anspruch 4, **dadurch gekennzeichnet, dass** das Gassackhalteteil (1) und der Diffusor (2) an mindestens einer Stirnseite für die Einführung eine Rohrgasgenerators (3) offen sind.

6. Beifahrerairbagmodul nach mindestens einem der vorhergehenden Ansprüche, **dadurch gekennzeichnet, dass** der Gassack (4) im Bereich außerhalb des Gassackhalteteils (1) zwischen dem Diffusor (2) und dem Gasgenerator (3) liegt.

7. Beifahrerairbagmodul nach mindestens einem der vorhergehenden Ansprüche, **dadurch gekennzeichnet, dass** als Verbindungselemente Gewindebolzen (9) am Diffusor vorgesehen sind.

8. Beifahrerairbagmodul nach mindestens einem der vorhergehenden Ansprüche, **dadurch gekennzeichnet, dass** der Diffusor (2) Durchbrüche (11) als Gasauslass aufweist.

9. Beifahrerairbagmodul nach mindestens einem der vorhergehenden Ansprüche, **dadurch gekennzeichnet, dass** der Diffusor (2) ausgestellte Hutzen (12, 13) als Gasauslass und für die Gasführung aufweist.

## Claims

1. Front-passenger airbag module having at least one gas generator, diffuser, self-supporting airbag and airbag housing, a component system comprising the airbag (4), the diffuser (2), the gas generator (3) and a dished airbag holder (1) being provided, which is arranged between the airbag housing (8) and the gas generator (3) and which is at least partially enclosed by the lower section (5) of the self-supporting airbag (4), furthermore connection elements (9) being provided for connecting the entire system comprising airbag (4), diffuser (2), gas generator (3) and airbag holder (1) to the airbag housing, **characterized in that** the connection elements (9) are also provided for connecting the diffuser (2) to the airbag holder (1).

2. Front-passenger airbag module according to Claim 1, **characterized in that** the diffuser (2) is designed so that there is a diffuser chamber (2b) between it and the dished airbag holder (1).

3. Front-passenger airbag module according to Claim 1 or 2, **characterized in that** the diffuser is of dished shape.

4. Front-passenger airbag according to Claim 3, **characterized in that** the diffuser (2) and the airbag holder (1) take the form of cylindrical half-shells, which have flange-like edges (1a, 2a), which rest on one another in the assembled state.

5. Front-passenger airbag according to Claim 4, **characterized in that** the airbag holder (1) and the diffuser (2) are open on at least one end face for the introduction of a tubular gas generator (3).

6. Front-passenger airbag module according to at least one of the preceding claims, **characterized in that** in the area outside the airbag holder (1) the airbag (4) is situated between the diffuser (2) and the gas generator (3).

7. Front-passenger airbag module according to at least one of the preceding claims, **characterized in that** threaded bolts (9) are provided as connection elements on the diffuser.

8. Front-passenger airbag module according to at least one of the preceding claims, **characterized in that** the diffuser (2) has openings (11) as gas outlet.

9. Front-passenger airbag module according to at least one of the preceding claims, **characterized in that** the diffuser (2) has flared scoops (12, 13) as gas outlet and for gas ducting.

## Revendications

1. Module d'airbag pour passager avec au moins un générateur de gaz, un diffuseur, un sac de gaz autoportant et un logement d'airbag,
dans lequel il est prévu un système composé du sac de gaz (4), du diffuseur (2), du générateur de gaz (3) et d'une partie de support de sac de gaz en forme de coque (1), qui est disposé entre le logement d'airbag (8) et le générateur de gaz (3) et qui est au moins partiellement enserré par la section inférieure (5) du sac de gaz autoportant (4), il est de plus prévu des éléments de liaison (9) pour le raccordement du système complet constitué du sac de gaz (4), du diffuseur (2), du générateur de gaz (3) et de la partie de support de sac de gaz (1) avec le logement d'airbag,
**caractérisé en ce que** les éléments de liaison (9) sont également prévus pour le raccordement du diffuseur (2) avec la partie de support du sac de gaz (1).

2. Module d'airbag pour passager selon la revendication 1, **caractérisé en ce que** le diffuseur (2) est conçu de telle sorte qu'entre celui-ci et la partie de support de sac de gaz en forme de coque (1), il existe une chambre de diffusion (2b).

3. Module d'airbag pour passager selon la revendication 1 ou 2, **caractérisé en ce que** le diffuseur est en forme de coque.

4. Module d'airbag pour passager selon la revendication 3, **caractérisé en ce que** le diffuseur (2) et la partie de support de sac de gaz (1) sont conçus en forme de semi-coques cylindriques qui présentent des bords en forme de collerettes (1a, 2a) se superposant en position de montage.

5. Module d'airbag pour passager selon la revendication 4, **caractérisé en ce que** la partie de support du sac de gaz (1) et le diffuseur (2) sont ouverts sur au moins un côté frontal pour l'introduction d'un générateur de gaz tubulaire (3).

6. Module d'airbag pour passager selon au moins l'une des revendications précédentes, **caractérisé en ce que** le sac de gaz (4), au niveau à l'extérieur de la partie de support de sac de gaz (1), se situe entre le diffuseur (2) et le générateur de gaz (3).

7. Module d'airbag pour passager selon au moins l'une des revendications précédentes, **caractérisé en ce qu'**il est prévu des goujons filetés (9) faisant office d'éléments de liaison sur le diffuseur.

8. Module d'airbag pour passager selon au moins l'une des revendications précédentes, **caractérisé en ce que** le diffuseur (2) présente des passages (11) faisant office de sorties de gaz.

9. Module d'airbag pour passager selon au moins l'une des revendications précédentes, **caractérisé en ce que** le diffuseur (2) présente des déviateurs (12, 13) en tant que sorties de gaz et servant au guidage de gaz.
